# EUROPÄISCHE PATENTANMELDUNG

(11) **EP 1 690 753 A2**
(43) Veröffentlichungstag der Anmeldung: **16.08.2006**
(21) Anmeldenummer: 05011967.6
(22) Anmeldetag: 03.06.2005
(51) Int. Cl.: B60R 21/34, B62D 25/08, B62D 27/04

(54) **Bausatz für die Montage eines Fahrzeugverkleidungselements**

(30) Priorität: 11.02.2005 DE 102005006306
(71) Anmelder: REHAU AG + Co, 95111 Rehau (DE)
(72) Erfinder: Mett, Thomas, 95182 Döhlau (DE)

(57) **Zusammenfassung**

Die Erfindung betrifft einen Bausatz für die Montage eines Fahrzeugverkleidungselements an einer Fahrzeugkarosserie. Es ist ein Ziel der vorliegenden Erfindung die Nachteile aus dem Stand der Technik zu beseitigen und insbesondere die Verletzungsgefahr anderer Verkehrsteilnehmer, insbesondere von Fahrradfahrern und Fußgängern, im Falle eines Zusammenstoßes mit einem Kraftfahrzeug zu reduzieren. Des weiteren ist es ein Ziel der vorliegenden Erfindung, den Arbeitsaufwand beim Austauschen des Fahrzeugverkleidungselements im Schadensfall zu verringern und die Montage des Ersatz-Fahrzeugverkleidungselements zu vereinfachen. Um diese Aufgabe zu lösen, stellt die Erfindung einen Bausatz bereit, umfassend ein Fahrzeugverkleidungselement, vorzugsweise einen Kotflügel (1), ein Absorptionselement (2), das an einem Fahrzeugkörper, vorzugsweise der Fahrzeugkarosserie anbringbar ist und dafür vorgesehen ist, eine Aufprallenergie beim Aufprallen eines Gegenstands auf das Fahrzeug zu absorbieren und ein Verbindungsmittel (3,5), durch welches das Fahrzeugverkleidungselement mit dem Absorptionselement verbindbar ist. Insbesondere stellt die Erfindung auch ein Fahrzeug mit einem eingebauten Bausatz bereit.

## Beschreibung

Die Erfindung betrifft einen Bausatz für die Montage eines Fahrzeugverkleidungselements an einer Fahrzeugkarosserie.

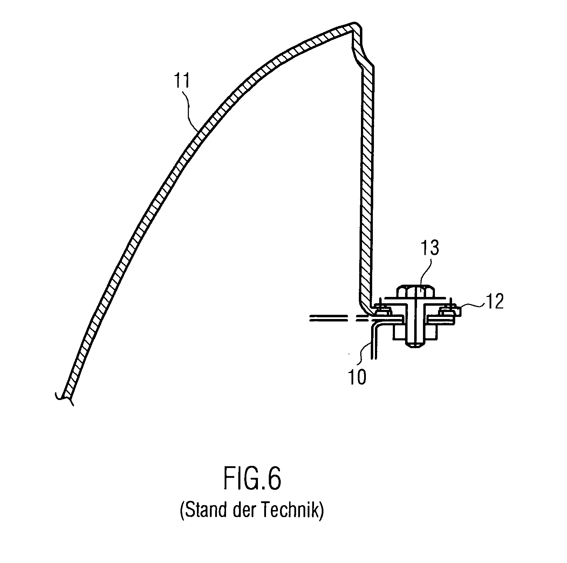

Ein herkömmlicher Kotflügel 11 wird, wie in Fig. 6 der beiliegenden Zeichnungen gezeigt ist, mittels mehrerer Bolzen 13 im Bereich einer Kammlinie über einen umgefalzten Flansch 12 am oberen Längsträger 10 des Vorbaus der Fahrzeugkarosserie befestigt. Durch den umgefalzten Anschraubflansch 12 besitzt der Kotflügel 11 im Bereich der Kammlinie, vor allem durch den senkrechten Steg, eine relativ hohe Steifigkeit bei nur geringen Absorptionseigenschaften.

Unfälle von Kraftfahrzeugen (Kfz) mit anderen Verkehrsteilnehmern wie Fußgängern oder Fahrradfahrern ereignen sich täglich im Straßenverkehr. Statistisch gesehen sind Unfälle besonders häufig, bei denen der Fahrer des Kfz das Unfallopfer übersieht und unverhofft dessen Fahrtrichtung kreuzt, so dass das Unfallopfer gegen den vorderen Kotflügel des Kfz prallt. Dabei ist vor allem der Kopf des Unfallopfers einer hohen Verletzungsgefahr ausgesetzt. Die hohe Steifigkeit und die geringen Absorptionseigenschaften des herkömmlichen Kotflügels wirken sich dabei nachteilig auf die passive Sicherheit des Unfallopfers aus. So trägt das Unfallopfer bei derartigen Unfällen auch schon bei geringer Aufprallgeschwindigkeit nicht selten schwere Kopfverletzungen davon. Zudem ergeben sich weitere Nachteile des herkömmlichen Kotflügels aufgrund seiner Struktur, die komplexes Werkzeug zur Erzeugung des Anschraubflansches erfordert. Außerdem kann der Kotflügel nur über mehrere einzelne Befestigungselemente am oberen Längsträger des Vorbaus der Fahrzeugkarosserie befestigt werden, was mit einem hohen Montageaufwand beim Austausch des Kotflügels einhergeht.

Im Lichte dessen liegt der Erfindung die Aufgabe zugrunde, die Nachteile aus dem Stand der Technik zu beseitigen und insbesondere die Verletzungsgefahr anderer Verkehrsteilnehmer, insbesondere von Fahrradfahrern und Fußgängern, im Falle eines Zusammenstoßes mit einem Kraftfahrzeug zu reduzieren. Des weiteren ist es ein Ziel der vorliegenden Erfindung, den Arbeitsaufwand beim Austauschen des Fahrzeugverkleidungselements im Schadensfall zu verringern und die Montage eines Ersatz-Verkleidungselements zu vereinfachen.

Um diese Aufgabe zu lösen stellt die Erfindung einen Bausatz bereit, umfassend ein Fahrzeugverkleidungselement, vorzugsweise einen Kotflügel, ein Absorptionselement, das an einem Fahrzeugkörper, vorzugsweise der Fahrzeugkarosserie anbringbar ist und dafür vorgesehen ist, eine Aufprallenergie beim Aufprallen eines Gegenstands auf das Fahrzeug zu absorbieren und ein Verbindungsmittel, durch welches das Fahrzeugverkleidungselement mit dem Absorptionselement verbindbar ist. Insbesondere stellt die Erfindung auch ein Fahrzeug bereit, mit zumindest einem Fahrzeugverkleidungselement, vorzugsweise einem Kotflügel und einem Absorptionselement, wobei das Absorptionselement zwischen einer Fahrzeugkarosserie und dem zumindest einen Fahrzeugverkleidungselement angeordnet ist, und dafür vorgesehen ist, eine Aufprallenergie beim Aufprallen eines Gegenstands auf das Fahrzeugverkleidungselement zu absorbieren. Das Absorptionselement wird als separate Montagestruktur verwendet und bestimmungsgemäß am oberen Längsträger des Vorbaus der in der Regel starren und unnachgiebigen Fahrzeugkarosserie befestigt, um die Aufprallenergie eines auf das Fahrzeugverkleidungselement aufprallenden Gegenstandes dämpfen zu können. Durch gezielte Materialauswahl und strukturelle Gestaltung des Absorptionselements kann ein Großteil der Aufprallenergie vom Absorptionselement absorbiert werden, so dass die Härte des Aufpralls gegenüber einer im Wesentlichen starren und an der Karosserie angeflanschten Fahrzeugverkleidung erheblich reduziert wird. Im Falle eines Zusammenstosses wird die Verletzungsgefahr für andere Verkehrsteilnehmer durch den erfindungsgemäßen Bausatz bzw. das erfindungsgemäße Fahrzeug mit eingebautem Bausatz erheblich verringert. Die separate Montagestruktur erlaubt außerdem eine vereinfachte Montage des Fahrzeugverkleidungselements, beispielsweise durch Verclipsung mit der Montagestruktur, wobei der Befestigungsflansch im Bereich der Kammlinie entfällt. Bei einem kleineren Blechschaden muss in der Regel nur der beschädigte Kotflügel ausgetauscht werden, nicht aber das Absorptionselement. Wegen des geringeren Materialbedarfs, aufgrund des Wegfallens des Flansches, lassen sich erfindungsgemäße Ersatzverkleidungsteile einfacher und günstiger herstellen als herkömmliche Ersatzteile. Andererseits kann das Fahrzeugverkleidungselement durch geschickte Auslegung des Verbindungsmittels viel einfacher und schneller mit dem Absorptionselement verbunden werden, z.B. durch Verclipsung, als über viel einzelne Befestigungselemente mit der Fahrzeugkarosserie, wie nach dem beschriebenen Stand der Technik.

Der Einbau und vor allem der Austausch des Fahrzeugverkleidungselements gestaltet sich als besonders einfach, wenn das Verbindungsmittel einen Rastmechanismus umfasst, mit dem das Fahrzeugverkleidungselement gegenüber dem Absorptionselement verrastbar ist.

Der Rastmechanismus kann dadurch besonders einfach verwirklich werden, dass das Verbindungsmittel zumindest einen Aufnahmeabschnitt und zumindest einen mit dem Aufnahmeabschnitt in Eingriff bringbaren Eingriffsabschnitt aufweist. Aufnahmeabschnitte und Eingriffsabschnitte lassen sich durch örtliche Materialaussparungen bzw. Materialanformungen am Fahrzeugverkleidungselement und/oder am Absorptionselement auf besonders einfache und kostengünstige Weise erzeugen.

In einer bevorzugten Ausführungsform weist der Eingriffsabschnitt eine Rastnase und der Aufnahmeabschnitt eine Rastnut auf. Dieser Rastmechanismus ist besonders einfach und kostengünstig herstellbar und ist in der Lage, den gesamten, im Einbauzustand des Bausatzes auftretenden Kräften standzuhalten.

In einer besonders bevorzugten Ausführungsform ist das Absorptionselement am Längsträger des Vorbaus einer Fahrzeugkarosserie anbringbar. Dort montiert, ist das Fahrzeugverkleidungselement über das Verbindungsmittel mit dem Absorptionselement verbindbar. Die Erfindung lässt sich, wie oben beschrieben, besonders vorteilhaft im vorderen Kotflügelbereich einsetzen. Das Absorptionselement dient als Montagestruktur, über die das Fahrzeugverkleidungselement mit der Fahrzeugkarosserie verbunden ist. Aufgrund der Anordnung am Längsträger des Fahrzeugs und der Ausrichtung in Längsrichtung des Fahrzeugs kann die Aufprallenergie im Falle eines Zusammenstosses mit einem anderen Verkehrteilnehmer quer zur Längsrichtung des Fahrzeugs besonders gut absorbiert werden.

Die Erfindung lässt sich besonders vorteilhaft einsetzen, wenn das Fahrzeugverkleidungselement ein Kotflügel, vorzugsweise der vordere Kotflügel ist.

Die Dämpfungs- und Absorptionseigenschaften des Absorptionselements sind besonders gut, wenn das Absorptionselement im Wesentlichen aus Kunststoff besteht. Darüber hinaus ist das Absorptionselement aus Kunststoff einfach und kostengünstig herstellbar.

Ein besonders einfaches und kostengünstiges Herstellungsverfahren für das Absorptionselement ist das Spritzgießverfahren. So lassen sich die Herstellungskosten für den gesamten Bausatz senken, wenn das Absorptionselement ein Spritzgussteil ist.

Im Fall eines Zusammenstoßes des Fahrzeugs mit einem Fußgänger oder Radfahrer quer zur Fahrtrichtung ist es von besonderem Vorteil, wenn das Fahrzeugverkleidungselement einen Halteabschnitt aufweist, der sich im Wesentlichen in Längsrichtung des Fahrzeugverkleidungselements erstreckt, der in einer Aufnahme des Absorptionselements vorzugsweise formschlüssig aufgenommen werden kann. Der Aufprall erfolgt in der Regel quer zur Fahrtrichtung des Fahrzeugs bzw. quer zur Längsrichtung des Fahrzeugverkleidungselements. Bei dieser Anordnung kann die Aufprallenergie vollständig auf das Absorptionselement übertragen werden, da das Fahrzeugverkleidungselement quer zu seiner Längsrichtung bzw. quer zur Längsrichtung des Fahrzeugs vom Absorptionselement abgestützt wird. Die sich entwickelnde Aufprallenergie wird unmittelbar in das Absorptionselement eingeleitet und dort großteils absorbiert.

Dazu ist es auch hilfreich, wenn das Fahrzeugverkleidungselement vorzugsweise im Wesentlichen senkrecht zu seiner Längsrichtung bzw. zur Längsrichtung des Fahrzeugs in die Aufnahme des Absorptionselements einsetzbar ist. Dadurch wird die Gefahr reduziert, dass die Verbindung zwischen dem Fahrzeugverkleidungselement und dem Absorptionselement ungewollt gelöst wird.

In einer besonders vorteilhaften Ausgestaltung der Erfindung sind die Eingriffsabschnitte als Federabschnitte ausgebildet.

In einer vorteilhaften Weiterbildung der Erfindung ist die Verbindung des Fahrzeugverkleidungselements mit dem Absorptionselement bei definierter Krafteinwirkung lösbar.

Die wesentlichen Merkmale und bevorzugten Ausführungsbeispiele der Erfindung werden nachstehend mit Bezug auf die beiliegenden Zeichnungen beschrieben.

Kurze Beschreibung der Zeichnungen:
- Fig. 1: zeigt den erfindungsgemäßen Bausatz mit einem Fahrzeugverkleidungselement und einem Absorptionselement in verbundenem Zustand.
- Fig. 2: zeigt den erfindungsgemäßen Bausatz mit einem Fahrzeugverkleidungselement und einem Absorptionselement in einer Explosionsdarstellung.
- Fig. 3: zeigt eine Seitenansicht auf den erfindungsgemäßen Bausatz mit einem Fahrzeugverkleidungselement und einem Absorptionselement im verbundenen Zustand.
- Fig. 4: zeigt die jeweiligen Schnittansichten der Schnitte A-A und B-B aus Fig. 3 auf den erfindungsgemäßen Bausatz mit dem Fahrzeugverkleidungselement und dem Absorptionselement im verbundenen Zustand.
- Fig. 5: zeigt schematisch den Einbauzustand des erfindungsgemäßen Bausatzes in einem Fahrzeug, wobei das Fahrzeugverkleidungselement ein vorderer Kotflügel ist.
- Fig. 6: zeigt einen an einem Längsträger eines Fahrzeugvorbaus befestigten Kotflügel nach dem Stand der Technik.

### Detaillierte Beschreibung der Zeichnungen

Nachstehend werden in der Beschreibung positionsangebende Begriffe wie "oben", "unten", "rechts", "links", "vorne", "hinten", etc. verwendet, die allein der Vereinfachung und Verständlichkeit der Beschreibung dienen. Diese Begriffe verstehen sich jeweils nur in Bezug auf die jeweilige Zeichnung und Ansicht, und haben daher keinen limitierenden Charakter.

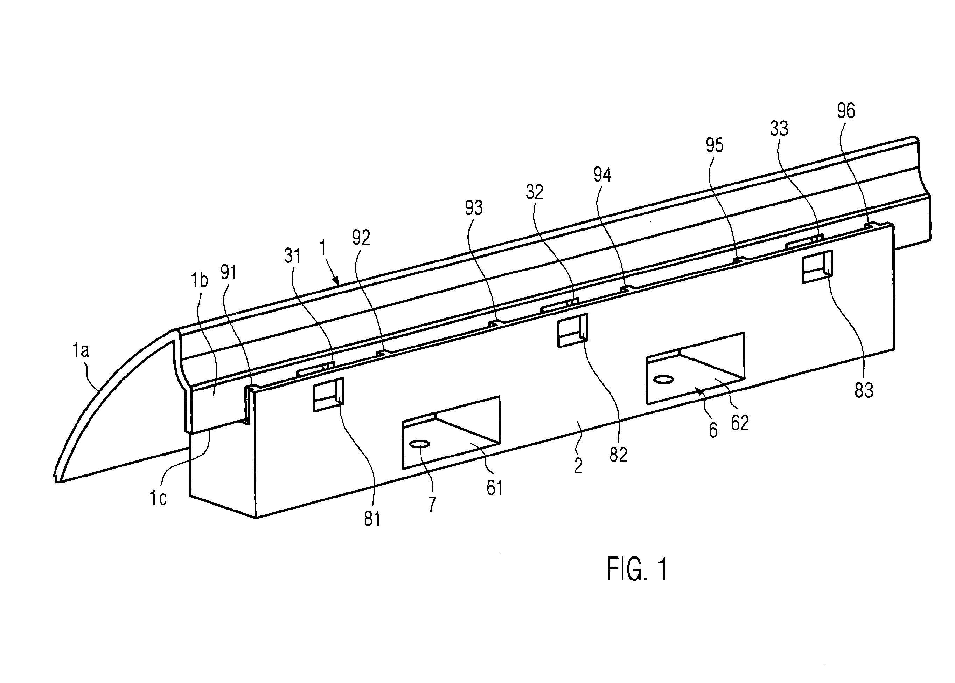

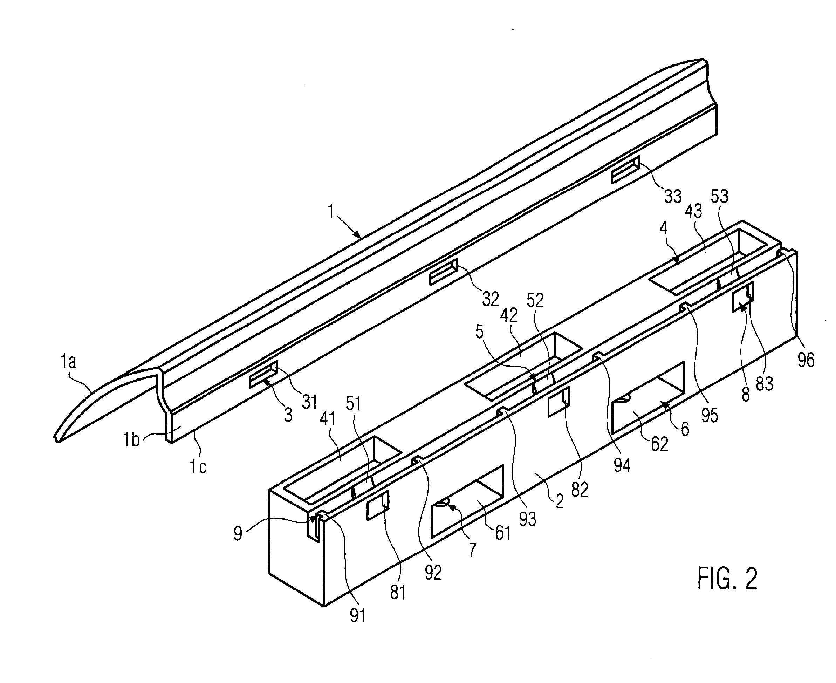

Fig. 1 zeigt einen erfindungsgemäßen Bausatz mit einem Fahrzeugverkleidungselement 1 und einem Absorptionselement 2 im zusammengebauten Zustand. Fig. 2 zeigt denselben erfindungsgemäßen Bausatz in einer Explosionsdarstellung zur Erleichterung des Beschreibung der wesentlichen Gestaltungsmerkmale des Fahrzeugverkleidungselements 1 und des Absorptionselements 2.

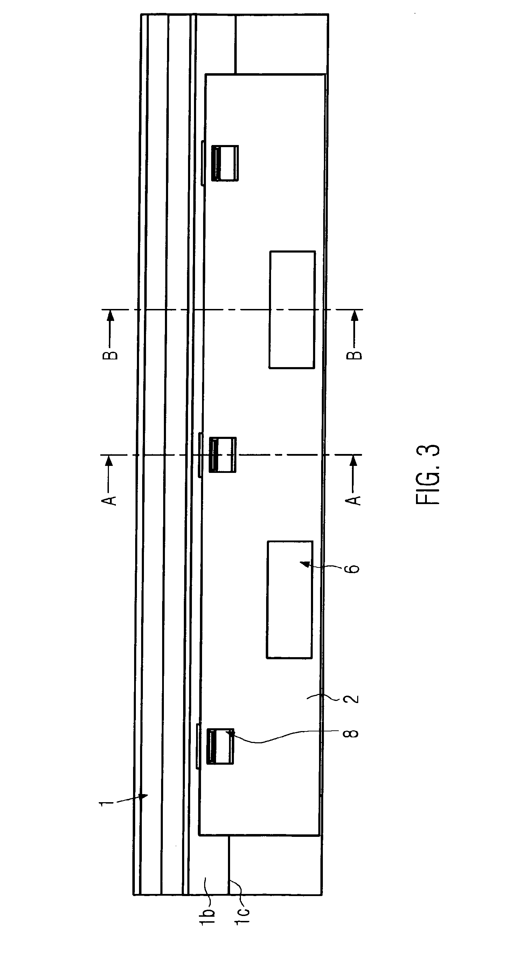

Fig. 3 zeigt eine Seitenansicht auf den zusammengebauten Bausatz mit dem Fahrzeugverkleidungselement 1 und dem Absorptionselement 2.

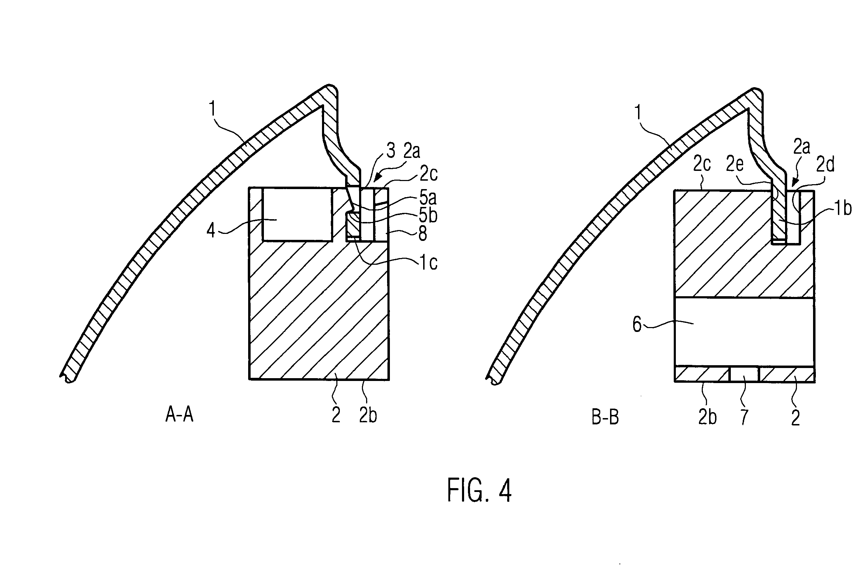

Fig. 4 zeigt die Schnitte A-A und B-B aus Fig. 3.

Im Folgenden werden die Merkmale des Fahrzeugverkleidungselements 1 und des Absorptionselements 2 mit Bezug auf Figuren 1 bis 5 beschrieben.

Das in den Figuren 1 bis 4 nur abschnittsweise dargestellte Fahrzeugverkleidungselement 1 ist ein längliches, dünnwandiges Bauteil mit einem die äußere Fahrzeugkontur abschnittsweise definierenden Strukturteil 1a, einem gegenüber dem gekrümmten Strukturteil 1a unter spitzem Winkel abgefalzten Halteabschnitt 1b, und einer den Halteabschnitt 1b endseitig abschließenden, geraden Kante 1c. Das Fahrzeugverkleidungselement 1 ist vorzugsweise aus Kunststoff oder Blech hergestellt und lackiert, und bildet einen linken und/oder rechten Kotflügel eines Fahrzeugs. Der durch die gerade Kante 1 c abgeschlossene, untere Teil des Halteabschnitts 1b mit konstanter Breite ist im Wesentlichen eben und weist eine Vielzahl von gleichförmigen, rechteckigen Durchbrüchen 3 auf, die in regelmäßiger Anordnung mit gleichmäßigem Abstand zueinander in einer zur Kante 1c parallelen Linie hintereinander angeordnet sind, wobei die Ränder der Durchbrüche 3 senkrecht bzw. parallel zur Kante 1c verlaufen. In den Schnittansichten A-A und B-B der Figur 4 bildet die Kante 1c den Krümmungsmittelpunkt der Krümmung an zumindest einigen Bereichen des Strukturteils 1a. Die Wandstärke des Fahrzeugverkleidungselements 1 beträgt in etwa 5 mm.

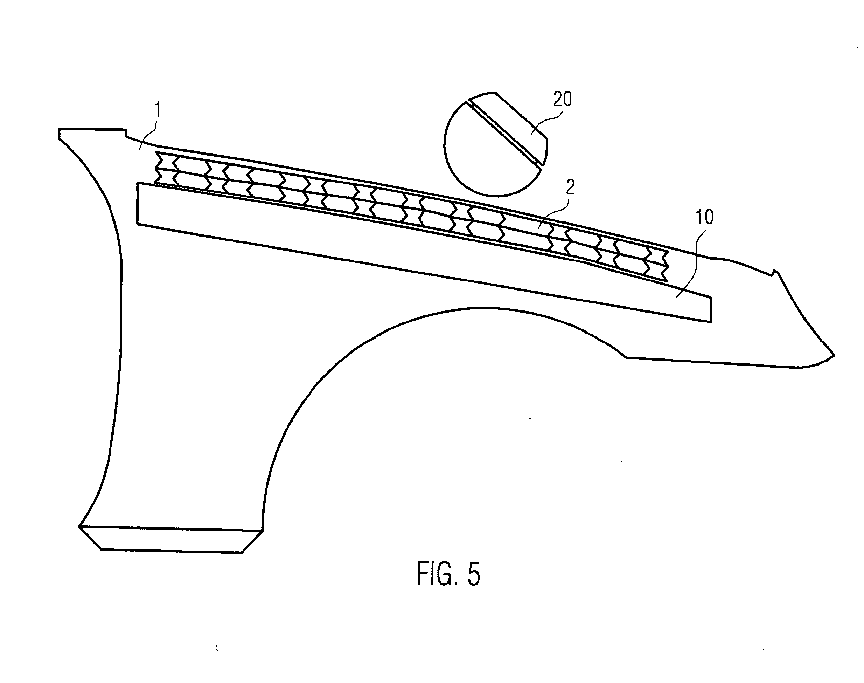

Das Absorptionselement 2 ist ein im Wesentlichen quaderförmiges Spritzgussbauteil mit einer länglichen und nutartigen Aufnahme 2a für den Halteabschnitt 1b des Fahrzeugverkleidungselements 1 an einer der Auflageseite 2b gegenüber liegenden Oberseite 2c. Das Absorptionselement 2 bildet eine an einem oberen Längsträger 10 eines Vorbaus einer Fahrzeugkarosserie montierbare Montagestruktur für das Fahrzeugverkleidungselement 1, und liegt im Einbauzustand, wie in Fig. 5 gezeigt wird, mit der Auflageseite 2b auf dem Längsträger 10 auf. Die Montagehöhe des Absorptionselements 2 bzw. der Abstand der Oberseite 2c mit der Aufnahme 2a zur Unterseite 2b beträgt in etwa 50 mm, bei einer Breite von ca. 40 mm und einer Länge von ca. 300 mm bis 500 mm.

Die Aufnahme 2a ist eine von der Oberseite 2c des Absorptionselements 2 herabgesetzte, nutartige Vertiefung, die sich in Längsrichtung des Absorptionselements 2 über dessen gesamte Länge erstreckt und endseitig offen ist, und wird seitlich von den Seitenwänden 2d und 2e begrenzt. Die Aufnahme 2a ragt ca. 20 mm tief von der Oberseite 2c in das Material des Absorptionselements 2 hinein und weist eine maximale Breite von in etwa 10 mm auf. Von der in Fig. 4 rechts liegenden Seitenwand 2d stehen stegförmige Distanzrippen 9 senkrecht zur Seitenwand 2d und über deren gesamte Höhe bis ca. in die Mitte der Aufnahme 2a hervor, und lassen dabei zur gegenüberliegenden, linken Seitenwand 2e einen Durchgang frei, der in etwa der Wandstärke des Halteabschnitts 1b des Fahrzeugverkleidungselements 1 entspricht. Die Rippen 9 sind über die gesamte Länge der Aufnahme 2a bzw. des Absorptionselements 2 gleichmäßig verteilt, d.h. sie sind im gleichmäßigen Abstand angeordnet, wobei sich die äußersten Rippen 91 und 96 unmittelbar an den offenen Endseiten der Aufnahme 2a befinden. Von der Seitenwand 2e stehen Rastnasen 5 in das Innere der Aufnahme 2a hervor. Die Rastnasen 5 sind, gemessen in Längsrichtung der Aufnahme 2a, auf halbem Abstand zwischen jeweils zwei Rippen 9 an der den Rippen 9 gegenüberliegenden Seitenwand 2e angeordnet; allerdings nur zwischen den ersten und zweiten Rippen 91 und 91, den dritten und vierten Rippen 93 und 94, sowie den fünften und sechsten Rippen 95 und 96, nicht aber zwischen den zweiten und dritten Rippen 92 und 93 bzw. den vierten und fünften Rippen 94 und 95. Die nach oben weisenden Seiten der Rastnasen 5 sind als schräge Gleitflächen 5a ausgebildet, die am oberen Rand der Aufnahme 2a ansetzen und bis auf etwa die halbe Höhe und 25% der Breite der Aufnahme 2a schräg nach unten verlaufen. Die zum Boden der Aufnahme 2a weisenden Unterseiten 5b der Rastnasen 5 schließen sich in etwa rechtwinklig an die schrägen Gleitflächen 5a an.

In den Ansichten A-A und B-B der Fig. 4 liegen im oberen Drittel des Absorptionselements 2, links und rechts der Aufnahme 2a, zwei Materialbereiche, nämlich ein breiter Materialbereich mit der Seitenwand 2e und ein schmaler Materialbereich mit der Seitenwand 2d. Der breite Materialbereich mit der Seitenwand 2e ist mit drei quaderförmigen Aussparungen 41, 42, 43 hinter den Rastnasen 51, 52, 53 versehen, die ebenso tief wie die Aufnahme 2a sind und sich jeweils in Längsrichtung des Absorptionselements 2 zwischen den Längenpositionen zweier benachbarter Rippen 91 und 92, 93 und 94, 95 und 96 erstrecken. Der Boden jeder Aussparung 4 befindet sich in etwa in einer Ebene mit dem Boden der Aufnahme 2a und die, in Längsrichtung gesehen, vorderen und hinteren Ränder der Aussparung 4 befinden sich jeweils in etwa auf einer Linie mit einer Rippe 9.

Der zwischen jeder Aussparung 4 und der Aufnahme 2a verbleibende Materialabschnitt der Seitenwand 2e hinter jeder Rastnase 5 ist flexibel und weist federnde Eigenschaften auf. Dadurch bildet jeder federnde Wandabschnitt der Seitenwand 2e mit Rastnase 5 einen Eingriffsabschnitt mit federnden Eigenschaften bzw. einen Federabschnitt, und kann aus der in der Ansicht A-A der Fig. 4 gezeigten Normalposition in Richtung der Aussparung 4 ausgelenkt werden, so dass der Halteabschnitt 1b des Fahrzeugverkleidungselements 1 in die Aufnahme 2a des Absorptionselements 2 einsetzbar ist, bis die Kante 1 c den Boden der Aufnahme 2a erreicht.

Die Formen und Positionen der Durchbrüche 3 im Halteabschnitt 1b des Fahrzeugverkleidungselements 1 sind auf die Formen und Positionen der Rastnasen 5 des Absorptionselements 2 so abgestimmt, dass die Rastnasen 5 beim vollständigen Einsetzen des Halteabschnitts 1b in die Aufnahme 2a in Eingriff mit den Durchbrüchen 3 gelangen und das Fahrzeugverkleidungselement 1 gegen Herausziehen aus dem Absorptionselement 2 sichern. Die Rastnasen 5 wirken dabei als Eingriffsabschnitte, die in den als Aufnahmeabschnitten dienenden Durchbrüchen 3 formschlüssig aufnehmbar sind.

Wie insbesondere die Fig. 2 anschaulich zeigt, ist das Absorptionselement 2 in Längsrichtung in fünf jeweils in etwa gleich lange Längeneinheiten unterteilt, wobei die Längeneinheiten durch die Längspositionen der Rippen 9 definiert werden. Die erste Längeneinheit des Absorptionselements 2 erstreckt sich in etwa zwischen den Rippen 91 und 92, die zweite Längeneinheit erstreckt sich in etwa zwischen den Rippen 92 und 93, die dritte Längeneinheit erstreckt sich in etwa zwischen den Rippen 93 und 94, usw. Wie oben beschrieben, sind in den ersten, dritten und fünften Längeneinheiten die Rastnasen 51, 52, 53 und die Aussparungen 41, 42, 43 vorgesehen.

In der zweiten und vierten Längeneinheit des Absorptionselements 2 befinden sich Durchbrüche 6 mit in etwa quaderförmigen Konturen, die quer zur Längsrichtung des Absorptionseiements 2 über die volle Breite des Absorptionselements 2 unter der Aufnahme 2a hindurchreichen. Wie in der Schnittansicht B-B der Fig. 4 gezeigt ist, erstrecken sich die Durchbrüche 61 und 62 über etwa ein Drittel der Höhe des Absorptionselements 2 und zwischen den jeweils benachbarten Rippen 92 und 93 bzw. 94 und 95. Die verbleibenden Materialabschnitte des Absorptionselements 2 unterhalb der Durchbrüche 6 sind mit Bohrungen 7 versehen, um Bolzen (nicht gezeigt) darin aufzunehmen, um das Absorptionselement 2 am Längsträger 10 des Vorbaus einer Fahrzeugkarosserie zu verschrauben.

In einem sich regelmäßig wiederholenden Muster sind die Rippen 9, Rastnasen 5, Aussparungen 4 und Durchbrüche 6 mit Bohrungen 7 in Längsrichtung des Absorptionselements 2 über dessen gesamte Länge angeordnet, wobei jeweils benachbarte Längenabschnitte des Absorptionselements 2 abwechselnd Verbindungen mit dem Fahrzeugverkleidungselement 1 bzw. mit dem Längsträger 10 herstellen.

Nachstehend wird die bevorzugte Anwendung der Erfindung mit Bezug auf die Figuren 1 bis 5 beschrieben.

Das Absorptionselement 2 wird vorzugsweise aus Kunststoff spritzgegossen. Zur Herstellung eignen sich alle Werkstoffe mit guten Absorptionseigenschaften. Die Durchbrüche 81, 82, 83 zwischen den Rippen 91 und 92, 93 und 94, 95 und 96 entstehen beim Spritzgießen des Absorptionselements 2 durch Schieber (nicht gezeigt) zum Formen der Hinterschnitte 5b an den Unterseiten der Rastnasen 5. Durch die Durchbrüche 8 können die Schieber nach dem vollständigen Aushärten des Absorptionselements 2 herausgezogen werden.

Zum Einbau des Bausatzes am Bestimmungsort wird das Absorptionselement 2 mittels Bolzen (nicht gezeigt) in der in Fig. 5 gezeigten Position am Längsträger 10 eines Fahrzeugvorbaus montiert bzw. angeschraubt, so dass sich das Absorptionselement 2 im Wesentlichen in der Längsrichtung des Fahrzeugs erstreckt. Die Seite des Absorptionselements 2 mit den Durchbrüchen 81, 82, 83 zwischen den Rippen 91 und 92, 93 und 94, 95 und 96 weist dabei zum Motorraum (nicht gezeigt) des Fahrzeugs. Anschließend wird das Fahrzeugverkleidungselement 1, in diesem Fall ein vorderer Kotflügel (siehe Fig. 5), in das Absorptionselement 2 eingesetzt bzw. auf das Absorptionselement 2 aufgesteckt. Dabei wird der Halteabschnitt 1b des Fahrzeugverkleidungselements 1 mit der Kante 1 c voran in die Aufnahme 2a des Absorptionselements 2 mit geringem Kraftaufwand eingeführt, und wird dabei von den Rippen 9 gegen die Schrägflächen 5a der von der Seitenwand 2e hervorstehenden Rastnasen 5 gedrückt. Bei geringem Druck von oben, senkrecht zur Oberfläche 2c des Absorptionselements 2, verdrängt die Kante 1c an der Unterseite des Halteabschnitts 1b die jeweiligen flexiblen Materialabschnitte der Seitenwand 2e mit den Rastnasen 5 aus der in Fig. 4 Ansicht A-A gezeigten Normalposition in Richtung der Aussparung 4.

Dabei dringt die Kante 1c bis fast auf den Boden in die Aufnahme 2a ein, bis die Positionen der Durchbrüche 31, 32, 33 im Halteabschnitt 1 b des Fahrzeugverkleidungselements 1 mit den Positionen der Rastnasen 51, 52, 53 übereinstimmen, und die Rastnasen 51, 52, 53 durch die Rückstellkraft der dahinter liegenden, flexiblen und federnden Materialabschnitte der Seitenwand 2e in die Durchbrüche 31, 32, 33 einrasten. Dabei wird das Fahrzeugverkleidungselement 1 durch Verclipsung auf dem Absorptionselement 2 montiert.

Fig. 4 zeigt einen teilweise montierten Zustand des erfindungsgemäßen Bausatzes. In der in Fig. 4 gezeigten Schnittansicht A-A, die stellvertretend für die anderen Verbindungsstellen eine der Verbindungsstellen zwischen dem Fahrzeugverkleidungselement 1 und dem Absorptionselement 2 abbildet, befindet sich die Rastnase 52 im Eingriff mit dem Durchbruch 32 im Halteabschnitt 1b des Fahrzeugverkleidungselements 1, der einen Aufnahmeabschnitt bildet. Der Halteabschnitt 1b des Fahrzeugverkleidungselements 1 befindet sich über die gesamte Länge des Absorptionselements 2 einerseits in Anlage mit der linken Seitenwand 2e, insbesondere den federnden Wandabschnitten bzw. Federabschnitten mit Rastnasen 5, und andererseits mit den von der Seitenwand 2d in die Aufnahme 2a hineinragenden Distanzrippen 9.

Die Schnittansicht B-B der Fig. 4 zeigt einen Schnitt durch den Durchbruch 6 zwischen den Rippen 94 und 95, und durch die Bohrung 7. Im oberen Drittel der Schnittansicht B-B ist dargestellt, wie der Halteabschnitt 1b des Fahrzeugverkleidungselements 1 von der Oberseite 2c des Absorptionselements 2 bis zu etwa 80 bis 90 % ihrer Tiefe in die Aufnahme 2a hineinragt und von den Distanzrippen 9 gegen die gegenüberliegende Seitenwand 2e gedrückt wird.

Fig. 5 zeigt schematisch den Einbauzustand des erfindungsgemäßen Bausatzes in einem Fahrzeug, wobei das Absorptionselement 2 am Längsträger 10 des Vorbaus einer Fahrzeugkarosserie montiert ist und das Fahrzeugverkleidungselement 1, in diesem Fall der vordere Kotflügel, mit dem Absorptionselement 2 verbunden ist. Beim Aufprall eines Gegenstandes 20 auf das Fahrzeugverkleidungselement 1, der in der Regel quer zur Fahrtrichtung bzw. Längsrichtung des Fahrzeugs erfolgt, wird die vom Fahrzeugverkleidungselement 1 aufgenommene Aufprallenergie über den Halteabschnitt 1b und die Rastnasen 51, 52, 53 in das Absorptionselement 2 eingeleitet und dort größtenteils absorbiert. Dadurch wird die Wucht des Aufpralls des Gegenstands 20 gegenüber der eingangs mit Bezug auf Fig. 6 beschriebenen, starren Kotflügelkonstruktion erheblich verringert.

Die Erfindung ist bei Fahrzeugverkleidungselementen 1 aus Metall - vorzugsweise aus Aluminium - und Kunststoff gleichermaßen einsetzbar und bietet unter anderem den Vorteil, dass auf den Befestigungsflansch 12 eines herkömmlichen Kotflügels 11 im Bereich der Kammlinie verzichtet werden kann. Infolge dessen ist das erfindungsgemäße Fahrzeugverkleidungselement 1 mit einfacherem Werkzeug herstellbar. Das Absorptionselement 2 ist bestimmungsgemäß so zwischen dem Fahrzeugverkleidungselement 1 und der starren Fahrzeugkarosserie 10 angeordnet, dass der montierte, erfindungsgemäße Bausatz gute Absorptionseigenschaften bei hoher Grundfestigkeit bietet. Das Eigenschaftsprofil der Montagestruktur ist über die Wanddicke und Höhe des Absorptionselements 2 sowie durch die Materialauswahl anpassungsfähig. Für die Montagestruktur ist ausreichende Gestaltungsfreiheit mit Potential für die Anpassung an die jeweilige Einbausituation gegeben. Darüber hinaus ist ein Ausbaupotential für den Ausbau der Montagestruktur 2 zum Modulträger bei Integration wesentlicher Baugruppen vorhanden, beispielsweise für den Ausbau zu einem Kotflügelmodul.

## Patentansprüche

1. Bausatz umfassend ein Fahrzeugverkleidungselement (1), vorzugsweise ein Kotflügel, ein Absorptionselement (2), das an einem Fahrzeug, vorzugsweise der Fahrzeugkarosserie (10) anbringbar ist und dafür vorgesehen ist, eine Aufprallenergie beim Aufprallen eines Gegenstands (20) auf das Fahrzeugverkleidungselement (1) zu absorbieren, und ein Verbindungsmittel (5, 8), mit dem das Fahrzeugverkleidungselement (1) gegenüber dem Absorptionselement (2) verbindbar ist.

2. Bausatz nach Anspruch 1, **dadurch gekennzeichnet, dass** das Verbindungsmittel (5, 8) einen Rastmechanismus umfasst, mit dem das Fahrzeugverkleidungselement (1) gegenüber dem Absorptionselement (2) verrastbar ist.

3. Bausatz nach einem der vorangegangenen Ansprüche, **dadurch gekennzeichnet, dass** das Verbindungsmittel zumindest einen Aufnahmeabschnitt (8) und zumindest einen Eingriffsabschnitt (5) aufweist, wobei der Eingriffsabschnitt (5) mit dem Aufnahmeabschnitt (8) in Eingriff bringbar ist.

4. Bausatz nach einem der vorangegangenen Ansprüche, **dadurch gekennzeichnet, dass** der Eingriffsabschnitt (5) eine Rastnase (5) aufweist und der Aufnahmeabschnitt (8) eine Rastnut (8) aufweist.

5. Bausatz nach einem der vorangegangenen Ansprüche, **dadurch gekennzeichnet, dass** zumindest ein Eingriffsabschnitt (5) mit dem Absorptionselement (2) verbunden ist und das Fahrzeugverkleidungselement zumindest einen Aufnahmeabschnitt (8) aufweist.

6. Bausatz nach einem der vorangegangenen Ansprüche, **dadurch gekennzeichnet, dass** das Absorptionselement (2) an einem Längsträger (10) des Fahrzeugs anbringbar ist.

7. Bausatz nach einem der vorangegangenen Ansprüche, **dadurch gekennzeichnet, dass** das Fahrzeugverkleidungselement (1) ein Kotflügel (1), vorzugsweise ein vorderer Kotflügel ist.

8. Bausatz nach einem der vorangegangenen Ansprüche, **dadurch gekennzeichnet, dass** das Absorptionselement (2) im Wesentlichen aus Kunststoff gefertigt ist.

9. Bausatz nach einem der vorangegangenen Ansprüche, **dadurch gekennzeichnet, dass** das Absorptionselement (2) ein Spritzgussteil ist.

10. Bausatz nach einem der vorangegangenen Ansprüche, **dadurch gekennzeichnet, dass** das Fahrzeugverkleidungselement (1) einen Halteabschnitt (1b) aufweist, der sich im Wesentlichen in der Längsrichtung des Fahrzeugverkleidungselements (1) erstreckt.

11. Bausatz nach einem der vorangegangenen Ansprüche, **dadurch gekennzeichnet, dass** das Fahrzeugverlileidungselement (1) vorzugsweise im Wesentlichen senkrecht zur Längsrichtung des Fahrzeugs auf das Absorptionselement (2) aufsteckbar ist.

12. Bausatz nach einem der vorangegangenen Ansprüche, **dadurch gekennzeichnet, dass** der Halteabschnitt (1 b) des Fahrzeugverkleidungselements (1) formschlüssig aufnehmbar ist.

13. Bausatz nach einem der vorangegangenen Ansprüche, **dadurch gekennzeichnet, dass** zumindest ein Eingriffsabschnitt (5) als Federabschnitt ausgebildet ist.

14. Bausatz nach einem der vorangegangenen Ansprüche, **dadurch gekennzeichnet, dass** das Fahrzeugverkleidungselement (1) bei definierter Krafteinwirkung außer Eingriff mit dem Absorptionselement (2) bringbar ist.

15. Bausatz nach einem der vorangegangenen Ansprüche, **dadurch gekennzeichnet, dass** der Halteabschnitt (1b) des Fahrzeugverkleidungselements (1) im Wesentlichen senkrecht zur Fahrzeuglängsachse in die Aufnahme (2a) des Absorptionselements (2) einsetzbar ist.

16. Fahrzeug mit einem an einer Fahrzeugkarosserie (10) angebrachten Absorptionselement (2) und einem Fahrzeugverkleidungselement (1), vorzugsweise einem Kotflügel (1), das mit dem Absorptionselement (2) verbunden ist, wobei das Absorptionselement (2) zwischen der Fahrzeugkarosserie (10) und dem Fahrzeugverkleidungselement angeordnet ist und dafür vorgesehen ist, eine Aufprallenergie beim Aufprallen eines Gegenstands auf das Fahrzeug (1) zu absorbieren.

17. Fahrzeug nach Anspruch 16, **dadurch gekennzeichnet, dass** das Absorptionselement an einem Längsträger (10) der Fahrzeugkarosserie montiert ist und sich im Wesentlichen in Längsrichtung des Fahrzeugs erstreckt.
